Europäisches Patentamt

(19) European Patent Office

Office européen des brevets

(11) Publication number: **0 255 043 B1**

(12) **EUROPEAN PATENT SPECIFICATION**

(45) Date of publication of patent specification: **09.10.91**  (51) Int. Cl.⁵: **B29C 47/20**, B29C 47/28

(21) Application number: **87110670.4**

(22) Date of filing: **23.07.87**

(54) Extrusion head device for thermoplastic polymers.

(30) Priority: **30.07.86 IT 2131586**

(43) Date of publication of application:
**03.02.88 Bulletin 88/05**

(45) Publication of the grant of the patent:
**09.10.91 Bulletin 91/41**

(84) Designated Contracting States:
**DE IT NL**

(56) References cited:
EP-A- 0 039 041      DE-A- 1 704 791
DE-A- 2 510 127      DE-A- 3 026 822
FR-A- 2 121 565      FR-A- 2 187 506
GB-A- 2 109 740

(73) Proprietor: **S.T. Soffiaggio Tecnica srl**
**Via Della Giardina 19**
**I-20052 Monza (MI)(IT)**

(72) Inventor: **Tietto, Mario**
**Via del Partigiani 116**
**Cinisello Balsamo (Milano)(IT)**

(74) Representative: **Garrone, Fernando**
**Internazionale Brevetti s.r.l. Via Brentano 2**
**I-20121 Milano(IT)**

## Description

The present invention relates to an extrusion head device for the extrusion of tubular elements in thermoplastic polymers, particularly adapted for the extrusion of tubular elements in thermoplastic polymers with high molecular weight.

The terms thermoplastic polymers with high molecular weight indicates, for example, polyethylene with a molecular weight of approximately 450000 or higher than this value.

Extrusion heads are known for the extrusion of thermoplastic polymers with low molecular weight; the German Patent DE 2100192 describes an extrusion head wherein the melted polymer is divided into two flows which are made to expand concentrically around a truncated-cone profile which is provided with its apex at the inflow of the thermoplastic material and with its base at the outflow of the formed tubular element. The tubular element thus obtained therefore has, in transverse cross section, two concentric rings, each one originated by one of said two flows. However, in practice it has been observed that this extrusion head operates with thermoplastic polymers having low molecular weight, but causes some problems with materials having a high molecular weight. In particular, it is difficult to ensure a correct balance between the flow forming the inner tubular element and the flow forming the outer tubular element, so that the finished tubular element which is the result of the coupling of the inner tubular element to the outer tubular element is permanently deformated in one direction or another.

Various attempts have been performed to overcome these disadvantages, by widening the cross section of one channel with respect to the cross section of the other channel, so as to attempt a rebalancing of the flow of the two channels to obtain a straight tubular element with constant cross section along its circumference. However, these attempts have only yielded partial results which are valid only with respect to a particular polymer and to a particular extrusion temperature, so that every time it is necessary to modify the type of polymer with high molecular weight or the extrusion temperature, the result is a degrading of the characteristics of the finished product.

Polymers with high molecular weight indeed have great difficulties in extrusion as they have very high viscosities combined with high memory, where memory defines the ability to preserve the original shape even after various subsequent manipulations. Thus if the tubular element, as it is formed inside the extrusion head, is not already more than perfect as to constancy in thickness and linearity in shape later it is no longer possible to correct it with subsequent workings.

Moreover, the high viscosity causes the polymer with high molecular weight to follow, inside the extrusion head, preferential paths of lesser friction, thus being unable to perfectly cover all the cylindrical surface of the tubular element.

The German patent no. 1704791 is different from the aforementioned patent in that it is provided with a tubular element formed by 3 single monolayer without concentric rings, and in that its is provided with discontinuous operation rather than with a continuous one. In particular, it is provided with a plunger, provided around the extrusion head, which operates intermittently, pumping, at each stroke, a portion of tubular element. The use of this extrusion head with high molecular weight polymers would entail even greater problems than in the aforementioned case, since inside the accumulation chamber the polymer would arrange itself along preferential flow lines, then preserving, memorized , this arrangement even after extrusion and therefore entailing remarkable variations in the thickness and linearity of the finished tubular element.

G.B. Patent Application 2109740 discloses a extrusion head for covering wires having four secondary channels. The extrusion head described therein comprises the features of the preamble of claim 1

The aim of the present invention is to eliminate the above described disadvantages by providing a universal extrusion head device which can be used with different polymers or also with different extrusion temperatures, without the need for adaptations or modifications of the passage cross sections.

Another aim of the present invention is to provide an extrusion head device which allows to obtain a tubular element in high molecular weight polymer having a constant wall cross section along all its perimeter and a straight linear shape without deformations.

A further object of the invention is to achieve a tubular element which can be processed by blow-molding and can thus be remarkably stretched without this entailing wall variations of the transverse cross section.

Not least object of the present invention is to achieve a tubular element having high-level mechanical characteristics.

This aim and other objects are achieved by the extrusion head device according to the invention, for thermoplastic polymers, for the production of a tubular element comprising at least one lateral inflow channel, a central stem extending longitudinally along the extrusion head, said at least one lateral inflow channel divided into four secondary channels, said four secondary channels having an inflow point offset by about 90° with respect to one another in a transverse cross section of the extrusion head; each of said secondary channels extending longitudinally and being provided with a transverse cross section having a passage opening radially decreasing and circumferentially increasing, characterized in that each of said secondary channels increases circumferentially until it occupies a portion of circumference of about 180° in the terminal composition portion of the tubular element; in said terminal portion, the opposite secondary channels, combining with one other, form two concentric tubular channels, said lateral inflow channel being provided with a transverse wedge which divides the flow into two derived channels the first of said two derived channels feeding two inner of said secondary channels, which cooperate to form a inner tubular channel of said two concentric tubular channels, the second of said two derived channels feeding two outer of said secondary channels which cooperate to form a outer tubular channel of said two concentric tubular channels.

Further characteristics and advantages of the invention will become apparent from the description of two embodiments of the invention, illustrated only by way of non-limitative example in the accompanying drawing, where:

figure 1 is a lateral view, in partial cross section, of an extrusion head device according to the prior art;

figure 2 is a transverse cross section a long the line II-II of figure 1;

figure 3 is a perspective view of the extrusion head device according to the invention;

figure 4 is a plane development on 360° of the arrangement of the feed channels according to a first embodiment;

figure 5 is a cross section view along the line V-V of figure 4;

figure 6 is a cross section view along the line VI-VI of figure 4;

figure 7 is a cross section view along the line VII-VII of figure 4;

figure 8 is a cross section view along the line VIII-VIII of figure 4;

figure 9 is a cross section view along the line IX-IX of figure 4;

figure 10 is a cross section view along the line X-X of figure 4;

figure 11 is a planar development on 360° of the arrangement of the feed channels according to a second embodiment;

figure 12 is a cross section view along the line XII-XII of figure 11;

figure 13 is a cross section view along the line XIII-XIII of figure 11;

figure 14 is a cross section view along the line XIV-XIV of figure 11;

figure 15 is a cross section view along the line XV-XV of figure 11;

figure 16 is a cross section view along the line XVI-XVI of figure 11;

figure 17 is a cross section view along the line XVII-XVII of figure 11;

figure 18 is a planar development on 360° of the arrangement of the feed channels according to a third embodiment;

figure 19 is a cross section view along the line XIX-XIX of figure 18;

figure 20 is a cross section view along the line XX-XX of figure 18;

figure 21 is a cross section view along the line XXI-XXI of figure 18;

figure 22 is a cross section view along the line XXII-XXII of figure 18;

figure 23 is a cross section view along the line XXIII-XXIII of figure 18;

figure 24 is a cross section view along the line XXIV-XXIV of figure 18;

figure 25 is a cross section view of the finished tubular element according to the invention.

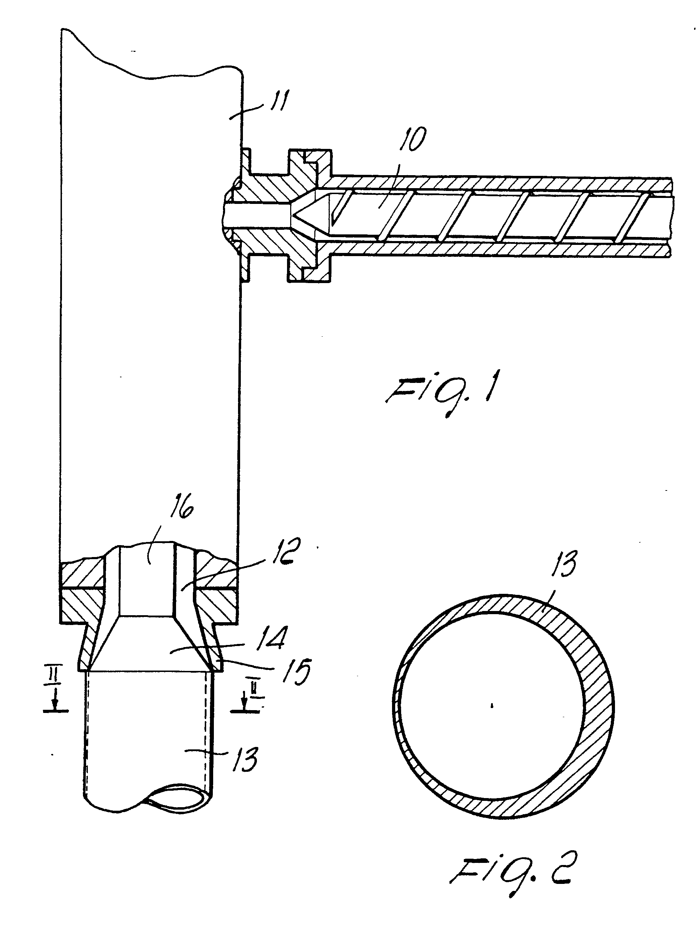

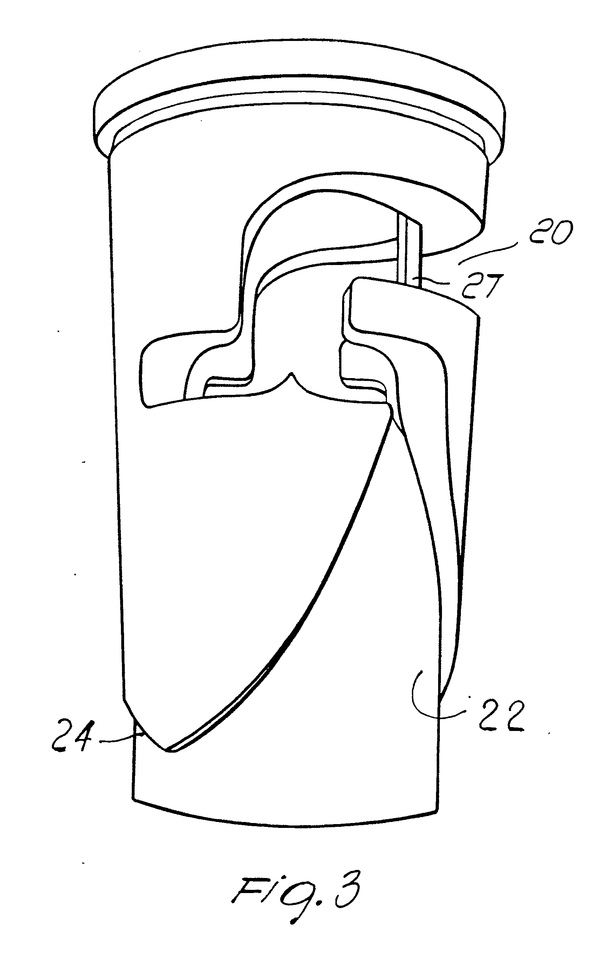

With reference to figures 1 and 2, a known extrusion head device, not within the scope of the protection of the present patent, comprises a volute 10 which introduces the melted polymer into the extrusion head 11.

Alternately, according to a well-known configuration also applicable to the device according to the invention, it is possible to provide two volutes 10, which independently feed the extrusion head. The melted polymer fills the cavity 12 comprised between the outer body of the extrusion head and a central stem 16 which extends longitudinally along the extrusion head. The tap 14 and the die 15 cooperate to respectively determine the inner and outer diameter of the tubular element.

Inside the head, preferential flow lines extend, causing, despite the perfect calibration of the tap and of the die, the wall thickness of the finished tubular element to be inconstant, but having a maximum value at the feed side and a minimum value on the opposite side.

With reference to figure 3, the extrusion head device according to the present invention comprises at least one lateral inflow channel, a central stem extending longitudinally along the extrusion head (not illustrated for the sake of the clarity, but substantially similar to the stem 16 configured according to the prior art). Figure 3 illustrates the configuration of the outer channels 22 and 24, while for the sake of the clarity of the drawing the inner channels 21 and 23 are not illustrated.

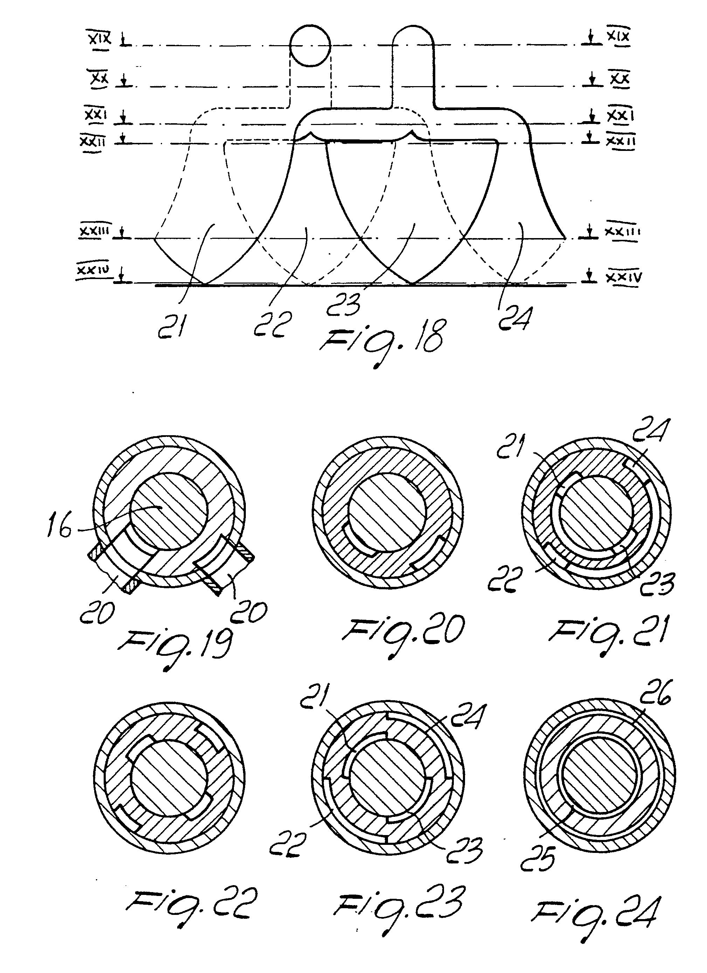

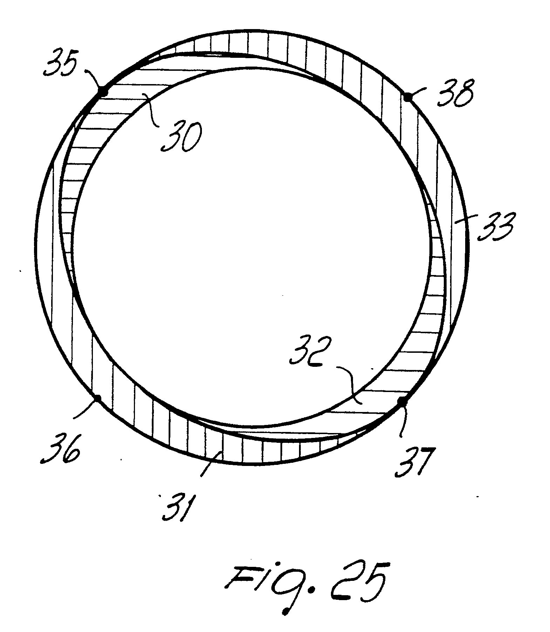

With reference to figures 4 to 24, an extrusion head device according to the invention is illustrated, it is provided that the lateral inflow channel 20 (or the inflow channels 10, figures 18 and 19 illustrating the presence to two inflow channels 20) is divided into four secondary channels 21, 22, 23 and 24 having an inflow point offset by 90° with respect to one another in a transverse cross section of the extrusion head. In particular, the transverse cross sections of the extrusion head illustrating the inflow of the four secondary channels are those of figures 7 and 8, 14 and 15, 21, and 22.

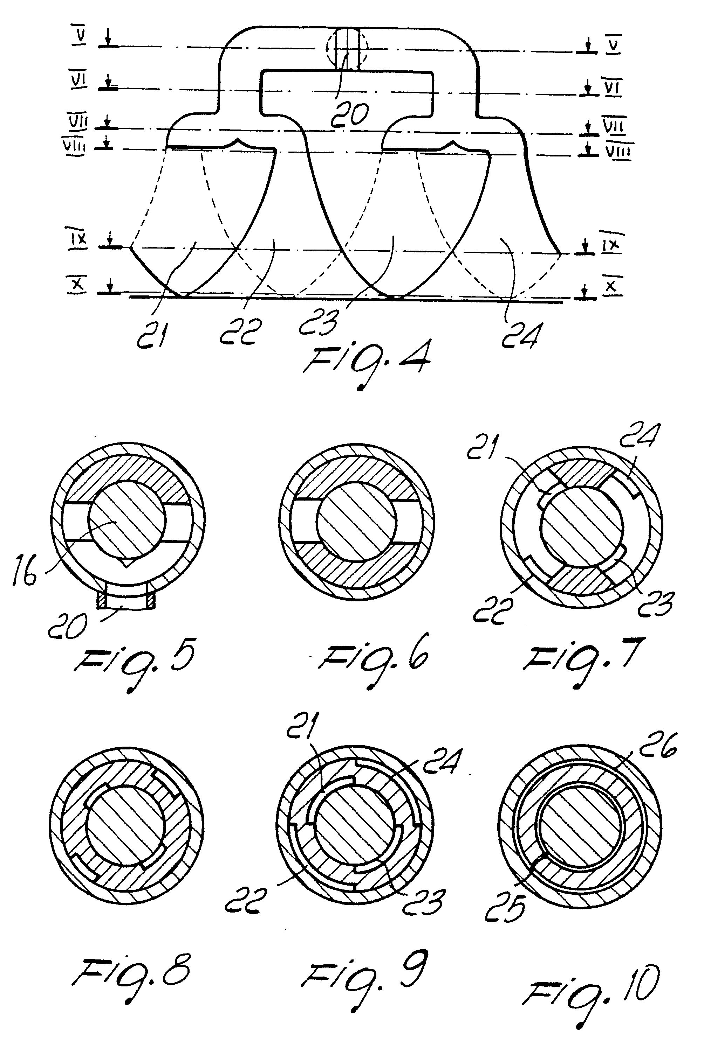

Each of the secondary channels 21, 22, 23 and 24 extends longitudinally in the body of the extrusion head, and is provided with a transverse cross section having a passage area which is preferably substantially constant, radially decreasing and circumferentially increasing along the path of the polymeric material in the channel. Each channel in fact constantly decreases its own thickness and instead increases its own lateral width, as illustrated in detail in the cross section views of figures 9, 16 and 23, until it occupies a portion of circumference of 180°, as illustrated in particular in the cross section views of figures 10, 17 and 24, in the terminal portion of composition of the tubular element. With particular reference to figures 10, 17 and 24, in the terminal region the tubular structure is formed, and the opposite secondary channels 21 and 23, as well as 22 and 24, increase their width until they combine with one another forming two concentric tubular channels 25 and 26. In particular the inner secondary channels 21 and 23 lead to the formation of the inner tubular channel 25 and the outer secondary channels 22 and 24 lead to the formation of the outer tubular channel 26.

The tubular elements created by the tubular channels 25 and 26 are thus joined to one another and further calibrated so as to provide, at the final output of the extrusion head device, a single tubular element illustrated with reference to figure 25.

The tubular element thus formed in thermoplastic polymer is provided, in transverse cross section, with four dividing walls 30, 31, 32 and 33 in the shape of a half-moon and offset by 90° with respect to one another. The four dividing walls 30, 31, 32 and 33 are respectively formed by the channels 21, 22, 23 and 24. The points 35, 36, 37 and 38 respectively represent the original position of each inflow point of the four secondary channels 21, 22, 23 and 24. The four dividing walls 30, 31, 32 and 33 each have a width of approximately 180° and are chamfer welded to one another.

Preferably, the secondary channels 21, 22, 23 and 24 extend on surfaces in the shape of a truncated cone having its larger base at the lateral inflow channel 20 and its smaller base at the terminal portion, corresponding to the cross section views of figures 10, 17 and 24.

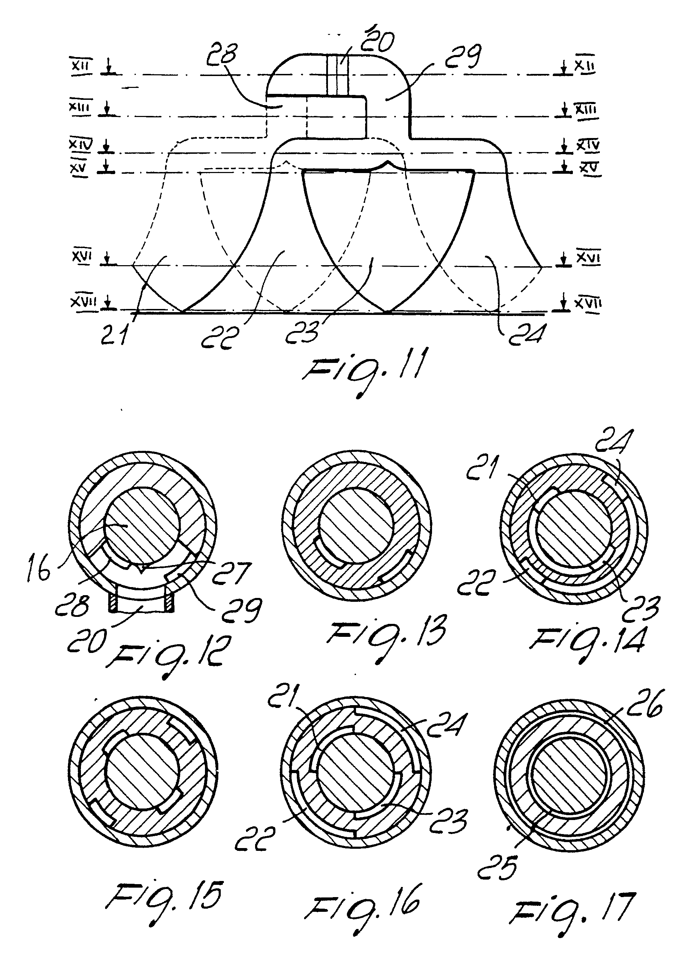

According to a preferred embodiment, as to the evenness of the tubular element obtained, with particular reference to figures 11-14, the lateral inflow channel 20 is provided with a transverse wedge 27 which divides the flow into two derived channels 28 and 29, the first of the two derived channels, channel 28, feeding the two inner secondary channels 21, 23, which cooperate to form the inner cylinder 25, the second of the two derived channels, channel 29, feeding the two secondary channels 22 and 24 which cooperate to form the outer cylinder 26.

In all the embodiments, the terminal portion of the extrusion head device according to the invention comprises a die flanged onto the outer body of the extrusion head, while the stem 16 supports the tap. The coupling of die and tap determines the outer and inner diameter of the finished tubular element.

The present invention is susceptible to numerous modifications and variations, all of which are within the scope of the same inventive concept. Thus, for example, it is possible to provide an extrusion head device with intermittent operation by providing a seat of accumulation of the thermoplastic polymer and a plunger, as illustrated in the German patent no. 1704791.

According to another embodiment, it is possible to provide a duplication, a triplication, a quadruplication etc. of the device according to the invention to form a multilayer tubular element, in which each layer is formed by four separate channels specifically dedicated to that individual layer. A device of this type, in practice, comprises a concentric series of devices according to the invention, each one arranged like the above described device.

In practice it has been observed that the tubular element produced by the extrusion head device according to the invention is free from defects of non-uniformity in thickness, being perfectly balanced in all its parts, so that it can be worked by blow-molding, even significantly increasing its diameter, preserving very high-level mechanical characteristics, regardless of the type of polymer extruded and of the extrusion temperature.

## Claims

1.  Extrusion head device for thermoplastic polymers, for the production of a tubular element comprising at least one lateral inflow channel (20), a central stem (16) extending longitudinally along the extrusion head, said at least one lateral inflow channel (20) being divided into four secondary channels (21, 22, 23, 24,), said four secondary channels having an inflow point offset by about 90° with respect to one another in a transverse cross section of the extrusion head; each of said secondary channels extending longitudinally and being provided with a transverse cross section having a passage opening radially decreasing and circumferentially increasing, characterized in that each of said secondary channels increases cicumferentially until it occupies a portion of circumference of about 180° in the terminal composition portion of the tubular element; in said terminal portion, the opposite secondary channels (21 and 23; 22 and 24), combining with one other, form two concentric tubular channels (25, 26), said lateral inflow channel being provided with a transverse wedge which divides the flow into two derived channels, the first of said two derived channels feeding two inner of said secondary channels (21 and 23), which cooperate to form a inner tubular channel (25) of said two concentric tubular channels, the second of said two derived channels feeding two outer of said secondary channels (22 and 24) which cooperate to form a outer tubular channel (26) of said two concentric tubular channels.

2. Extrusion head device according to claim 1, characterized in that said secondary channels (21, 22, 23, 24) extend on surfaces in the shape of a truncated cone having the larger base at said at least one lateral inflow channel (20) and the smaller base at said terminal portion.

3. Device according to claims 1 and 2, characterized in that said passage opening is provided with an area of the transverse cross section which is substantially constant starting from the inflow of each secondary channel (21, 22, 23, 24) , up to said terminal portion.

**Revendications**

1. Dispositif de tête d'extrusion pour polymères thermoplastiques en vue de la production d'un élément tubulaire comprenant au moins un canal d'entrée latéral (20), une tige centrale (16) s'étendant longitudinalement le long de la tête d'extrusion, au moins un canal d'entrée latéral (20) étant divisé en quatre canaux secondaires (21, 22, 23, 24), ces quatres canaux secondaires ayant un point d'entrée décalé d'environ 90° l'un par rapport à l'autre dans une section transversale de la tête d'extrusion ; chacun des canaux secondaires s'étendant longitudinalement et étant doté d'une section transversale avec une ouverture de passage diminuant radialement et augmentant de circonférence, caractérisé en ce que chacun des canaux secondaires augmente de circonférence jusqu'à occuper une portion de circonférence d'environ 180° dans la portion de composition terminale de l'élément tubulaire ; dans la portion terminale, les canaux secondaires opposés (21 et 23 ; 22 et 24) en combinaison l'un avec l'autre, forment deux canaux tubulaires concentriques (25, 26), le canal d'entrée latéral étant muni d'un coin transversal qui divise le flux en deux canaux dérivés, le premier de ces deux canaux dérivés alimentant deux canaux intérieurs (21 et 23) qui coopèrent pour former un canal tubulaire intérieur (25) des deux canaux tubulaires concentriques, le second des deux canaux dérivés alimentant deux canaux extérieurs (22 et 24) qui coopèrent pour former un canal tubulaire extérieur (26) des deux canaux tubulaires concentriques.

2. Dispositif de tête d'extrusion selon la revendication 1, caractérisé en ce que les canaux secondaires (21, 22, 23, 24) s'étendent sur des surfaces ayant la forme d'un cône tronqué avec la grande base sur au moins un canal d'entrée latéral (20) et la petite base sur la portion terminale.

3. Dispositif selon les revendications 1 et 2, caractérisé en ce que l'ouverture de passage est munie d'une zone de section transversale qui est sensiblement constante à partir de l'entrée de chaque canal secondaire (21, 22, 23, 24) jusqu'à la portion terminale.

**Patentansprüche**

1. Extruderkopf für thermoplastische Polymere zur Herstellung eines rohrförmigen Elements, enthaltend wenigstens einen seitlichen Einlaßkanal (20) und einen mittleren, sich in Längsrichtung des Extruderkopfs erstreckenden Kern (16), wobei der wenigstens eine seitliche Einlaßkanal (20) auf vier sekundäre Kanäle (21,22,23,24) verteilt ist deren Einlaßpunkte im Querschnitt des Extruderkopfs um je 90° zueinander versetzt sind und wobei jeder sekundäre Kanal in Längsrichtung erstreckt und mit einem Durchgangsquerschnitt versehen ist, der in radialer Richtung ab- und in Umfangsrichtung zunimmt dadurch gekennzeichnet daß jeder sekundäre Kanal in Umfangsrichtung zunimmt bis er einen über etwa 180° erstreckten Teil im Endbildungsabschnitt des rohrförmigen Elements einnimmt daß sich in diesem Endabschnitt die jeweils gegenüberliegenden sekundären Kanäle (21 und 23; 22 und 24) miteinander zu zwei konzentrischen, rohrförmigen Kanälen (25,26) vereinigen und daß der seitliche Einlaßkanal mit einem quer verlaufenden Keil versehen ist, der den Strom auf zwei abgeleitete Kanäle verteilt, wobei der erste abgeleitete Kanal zwei innere der sekundären Kanäle (21 und 23) speist, die unter Bildung eines inneren rohrförmigen Kanals (25) der beiden konzentrischen, rohrförmigen Kanäle zusammenwirken, während der zweite der abgeleiteten Kanäle zwei äußere der sekundären Kanäle (22 und 24) speist, die unter Bildung eines äußeren rohrförmigen Kanals (26) der beiden konzentrischen, rohrförmigen Kanäle zusammenwirken.

2. Extruderkopf nach Anspruch 1, dadurch gekennzeichnet, daß sich die sekundären Kanäle (21,22,23,24) längs Oberflächen in Form eines Kegelstumpfs erstrecken, dessen größere Grundfläche an dem wenigstens einen seitlichen Einlaßkanal (20) und deren kleinere Grundfläche am Endabschnitt liegt.

3. Extruderkopf nach Anspruch 1 oder 2, dadurch gekennzeichnet, daß die Durchgangsöffnung mit einer Querschnittsfläche versehen ist, die von dem Einlaß jedes sekundären Kanals (21,22,23,24) bis zum Endabschnitt im wesentlichen konstant ist.

Fig. 1

Fig. 2

Fig.3

Fig.4

Fig.5

Fig.6

Fig.7

Fig.8

Fig.9

Fig.10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

11

Fig. 25